# EUROPEAN PATENT SPECIFICATION

(11) **EP 0 773 417 B1**
(45) Date of publication and mention of the grant of the patent: **06.02.2002**
(21) Application number: 96308058.5
(22) Date of filing: 06.11.1996
(51) Int. Cl.: F25J 3/04

(54) **Air separation method and apparatus for producing nitrogen**
Lufttrennungsverfahren und Vorrichtung zur Herstellung von Stickstoff
Procédé et dispositif pour la production d'azote par séparation d'air

(30) Priority: 07.11.1995 US 553173
(43) Date of publication of application: 14.05.1997
(73) Proprietor: THE BOC GROUP, INC., Murray Hill, New Providence, New Jersey 07974 (US)
(72) Inventor: Naumovitz, Joseph P., Lebanon, New Jersey 08833 (US)
(74) Representative: Wickham, Michael

(56) References cited:
- EP-A- 0 624 767
- GB-A- 2 120 374
- US-A- 4 617 037
- US-A- 5 349 822
- US-A- 5 396 772

## Description

The present invention relates to a method and apparatus for producing nitrogen.

Nitrogen is produced from single column air separation plants known in the art as nitrogen generators. In one particularly efficient nitrogen generator, filtered, compressed and purified air is separated within a single column to produce a nitrogen-rich vapour as column overhead and oxygen-rich liquid as column bottoms. A head condenser is provided to condense a stream of the nitrogen-rich vapour to produce column reflux. The coolant used for such condensation duty is supplied by a valve expanded stream of the oxygen-rich liquid. This coolant vaporises and a portion of the stream is re-compressed either at the temperature of the warm or cold end of a main heat exchanger used in cooling the air to a temperature suitable for its distillation. The re-compressed. vaporised coolant is then introduced into the column in order to increase the overall recovery of the nitrogen. At the same time, part of the vaporised coolant can be partly warmed and then expanded with the performance of work. The expanded stream acts as a refrigerant to supply plant refrigeration. Part of the work of expansion is applied to the compression in order to conserve energy.

EP-A-0 624 767 shows also a method for producing nitrogen similar to the one described above. In this method, instead of warming and expanding with performance of work part of the vaporised coolant, and then using this stream to supply plant refrigeration, a portion of nitrogen rich-vapour is used for this purpose. This nitrogen-rich vapour is first warmed and then turboexpanded.

As will be discussed, the type of process, outlined above, can be operated to further increase the recovery of nitrogen product.

According to the present invention there is provided a method of producing nitrogen said method comprising:
cooling in a main heat exchanger compressed, purified feed air to a temperature suitable for its rectification;
introducing said compressed, purified feed air into a distillation column to produce a nitrogen rich vapour column overhead and oxygen-rich liquid as column bottoms;
extracting nitrogen containing liquid from said distillation column, said nitrogen containing liquid having a nitrogen content (i.e. concentration) greater than that of said oxygen-rich liquid;
expanding first and second coolant streams composed of said oxygen-rich liquid and said nitrogen containing liquid, respectively;
condensing at least part of a nitrogen-rich stream composed of said nitrogen-rich vapour column overhead and introducing at least part of the resulting condensate into said distillation column as reflux, wherein the condensation is performed in heat exchange with said first and second coolant streams, the first and second coolant streams thereby being vaporised;
extracting a nitrogen product from another part of said nitrogen rich stream;
warming said first vaporised coolant stream in the main heat exchanger to a temperature less than ambient and expanding the warmed first vaporised coolant stream with performance of work to form a refrigerant stream;
indirectly exchanging heat in the main heat exchanger between said refrigerant stream and said compressed and purified air; and
compressing the second vaporised coolant stream, cooling the second vaporised coolant stream in the main heat exchanger to a temperature suitable for its rectification, and introducing said second vaporised coolant stream into a bottom region of said distillation column.

The invention also provides an apparatus for producing nitrogen
said apparatus comprising: a main heat exchanger for cooling compressed, purified feed air to a temperature suitable for its rectification, for partially warming a first vaporised coolant stream, for fully cooling a second vaporised coolant stream to said temperature, and for indirectly transferring heat from said compressed, purified feed air to a refrigerant stream;
a distillation column communicating with said main heat exchanger to receive said compressed, purified feed air, thereby to produce a nitrogen rich column overhead and an oxygen-rich liquid as column bottoms;
a condenser for condensing at least part of a nitrogen-rich stream composed of said nitrogen-rich column overhead, for introducing at least part of the resulting condensate into said distillation column as reflux, and for vaporising first and second coolant streams, thereby to form said first and second vaporised coolant streams;
said condenser communicating with said distillation column so that said first coolant stream is composed of said oxygen-rich liquid and said second coolant stream is composed of a nitrogen containing liquid having a nitrogen concentration greater than that of said oxygen-rich liquid;
said condenser also communicating with said main heat exchanger so that said first vaporised coolant stream is partially warmed therewithin;
first and second expansion valves interposed between said condenser and said distillation column for expanding said first and second coolant streams, respectively;
means for extracting a nitrogen product from another part of said nitrogen rich stream;
a turboexpander communicating with said main heat exchanger for expanding said first vaporised coolant stream with performance of work to form said refrigerant stream;
said main heat exchanger communicating with the outlet of said turboexpander so that said compressed and purified air indirectly exchanges heat with said refrigerant stream; and
a compressor communicating with said condenser for compressing said second vaporised coolant stream;
said compressor also communicating with said main heat exchanger so that said second vaporised coolant stream is cooled therewithin; and
said distillation column also communicating with said main heat exchanger at said bottom region thereof for receiving said second vaporised coolant stream into said distillation column, after having been fully cooled to said temperature.

The re-introduction of the second vaporised coolant stream back into the distillation column increases recovery of the nitrogen product. The second vaporised coolant stream is derived from a liquid nitrogen containing stream having a higher nitrogen content than the oxygen-rich liquid. As such, it has a higher dewpoint pressure for the same temperature of oxygen-rich liquid. Therefore, the supply pressure of the second vaporised coolant stream to the compressor is higher and thus, more flow can be compressed for the same amount of work. This increase in flow allows for an increase in heat pumping action which boosts recovery over the prior art in which the vaporised, crude-liquid oxygen stream is recirculated and returned to the column. Moreover, the stream composition of the nitrogen containing liquid is close to the equilibrium vapour composition in the sump of the column. This allows the bottom of the column to operate more reversibly than in the prior art.

As used herein, that the term "fully warmed" means warmed to the warm end of the main heat exchanger; the term "fully cooled" means cooled to the temperature of the air prior to the introduction of the air into the distillation column, and the term "partially warmed" means warmed to an intermediate temperature, namely a temperature between the warm and cold end temperatures of the main heat exchanger.

The method and apparatus according to the invention will now be described by way of example only with reference to the accompanying diagram which is a schematic flow diagram of a plant for separating air.

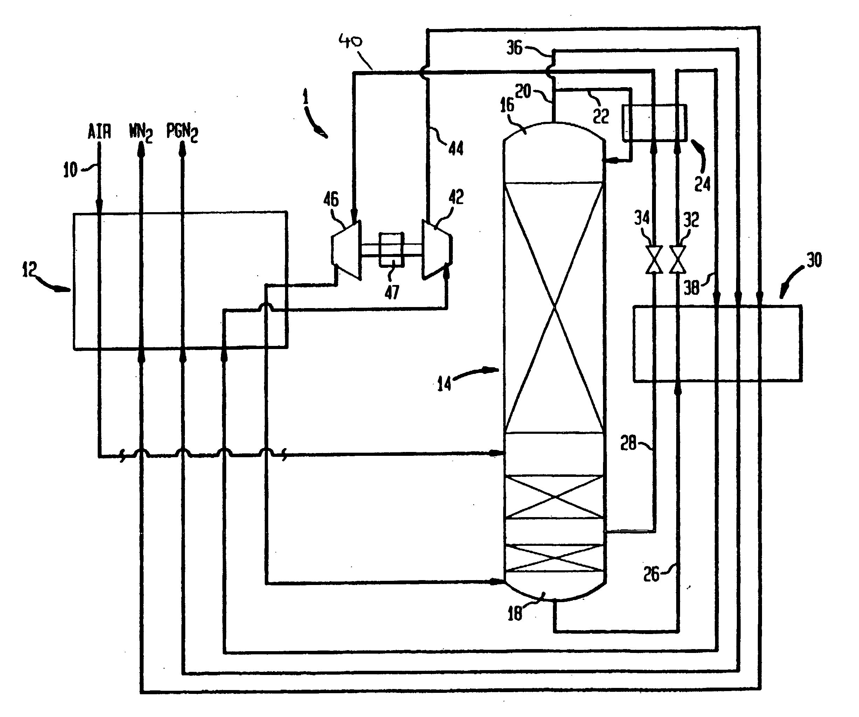

With reference to the Figure, an air separation plant 1 is illustrated for generating a nitrogen product. A compressed, purified feed air stream 10 is introduced into a main heat exchanger 12. Although not illustrated, in a manner well known in the art, feed air stream 10 is produced by filtering air with a filter to remove dust particles and then compressing the air. After the heat of compression is removed by an after-cooler, the air is purified within a pre-purification unit, normally containing beds of molecular sieve operating out of phase to remove carbon dioxide, moisture and hydrocarbons from the feed air.

Feed air stream 10 after having been cooled within main heat exchanger 12 to a temperature suitable for its distillation (i.e. rectification), is then introduced into an intermediate region of a distillation column 14 to produce a nitrogen-rich vapour column overhead in a top region 16 of distillation column 14 and an oxygen-rich liquid column bottoms in a bottom region 18 of distillation column 14. Distillation column 14 can use trays, random packing, or structured packing to produce intimate contact with an ascending vapour phase and a descending liquid phase of the air to be separated in order to fractionate the air into nitrogen-rich vapour and the oxygen-rich liquid. Distillation column 14 is designed such that the nitrogen-rich vapour is high-purity nitrogen, that is nitrogen having a purity of less than 100 parts per billion of oxygen.

A nitrogen-rich ("column overhead") stream 20 is extracted from the top of the distillation column 14. A part 22 of nitrogen-rich stream 20 is condensed within a condenser 24. The resulting condensate is introduced back into distillation column 14 as reflux. As can be appreciated, all of the nitrogen-rich stream could be condensed. In such case, only part of the condensate would serve as reflux while a remaining part of the condensate could be taken as a product.

A first coolant stream 26 composed of the oxygen-rich liquid column bottoms is extracted from distillation column 14. A second coolant stream 28 is produced by extracting a nitrogen containing liquid from distillation column 14. Since the nitrogen containing liquid is extracted above bottom region 18 of distillation column 14, it has a nitrogen content greater than that of the oxygen-rich liquid that collects within bottom region 18 of distillation column 14. First and second coolant streams 26 and 28 are subcooled within a subcooling unit 30 and are valve expanded within pressure reduction valves 32 and 34, respectively. The pressure reduction reduces the temperature of first and second coolant streams 26 and 28 so that they can be used within head condenser 24 to condense part 22 of nitrogen-rich stream 20.

Another part 36 of nitrogen-rich stream 20 is initially warmed within subcooling unit 30 to the temperature of the cold end of the main heat exchanger 12. Thereafter, part 36 of nitrogen-rich stream 20 is fully warmed within main heat exchanger 12 to be discharged as a product gas nitrogen stream labelled PGN₂.

Vaporisation within head condenser 24 causes first coolant stream 26 to become a first vaporised coolant stream 38. Similarly, vaporisation of second coolant stream 28 causes a second vaporised coolant stream 40 to be produced. First vaporised coolant stream 38 is initially warmed within subcooler unit 30 to the temperature of the cold end of main heat exchanger 12 and then is partially warmed within main heat exchanger 12. First vaporised coolant stream 38 is thereafter introduced into a turboexpander 42 to produce a refrigerant stream 44. Refrigerant stream 44 warms within subcooler unit 30 and then fully warms within main heat exchanger 12 where it is discharged as a waste nitrogen stream labelled WN₂.

Second vaporised coolant stream 40 is compressed within a recycle compressor 46 and is then fully cooled. Recycle compressor 46 is coupled to turboexpander 42 so that part of the work of expansion is applied to the compression. A remaining part of the work of expansion is rejected as heat through an energy dissipative brake 47. Subsequently, second vaporised coolant stream 40 is introduced into the bottom region 18 of distillation column 14 in order to increase recovery of the nitrogen product. It is to be noted that the compressed, purified air stream is introduced into an intermediate location of distillation column 14. This intermediate location is one in which the incoming air of the same composition as the vapour phase of the air being separated within distillation column 14. The compressed, purified feed air stream 10 could however be combined with second vaporised coolant stream 40 and introduced into bottom region of distillation column 14. This however would not be as thermodynamically efficient as the illustrated embodiment.

In the illustrated embodiment, second vaporised coolant stream 40 is compressed at essentially the temperature at which the distillation of the air is conducted. The term "essentially" is used herein because second vaporised coolant stream 40 would be slightly colder than the temperature of distillation column 14 at the intermediate entry point of compressed and purified air stream 10 and hence, the cold end of main heat exchanger 12. Although not illustrated, in an alternative embodiment, second vaporised coolant stream 40 could be fully warmed within main heat exchanger 12, re-compressed, and then fully cooled.

## Claims

1. A method of producing nitrogen, said method comprising:
cooling in a main heat exchanger (12) compressed, purified feed air to a temperature suitable for its rectification;
introducing said compressed, purified feed air into a distillation column (14) to produce a nitrogen rich vapour (20) column overhead and oxygen-rich liquid (26) as column bottoms;
extracting nitrogen containing liquid from said distillation column, said nitrogen containing liquid having a nitrogen concentration greater than that of said oxygen-rich liquid;
expanding (34, 32) first and second coolant streams composed of said oxygen-rich liquid and said nitrogen containing liquid, respectively;
condensing (24) at least part of a nitrogen-rich stream composed of said nitrogen-rich vapour column overhead and introducing at least part of the resulting condensate into said distillation column as reflux, wherein the condensation is performed in heat exchange with said first and second coolant streams, the first and second coolant streams thereby being vaporised;
extracting a nitrogen product (36) from another part of said nitrogen rich stream;
warming said first vaporised coolant stream in the main heat exchanger (12) to a temperature less than ambient and expanding (42) the warmed first vaporised coolant stream with performance of work to form a refrigerant stream;
indirectly exchanging heat in the main heat exchanger between said refrigerant stream (44) and said compressed and purified air; and
compressing (46) the second vaporised coolant stream, cooling the second vaporised coolant stream in the main heat exchanger (12) to a temperature suitable for its rectification, and introducing said second vaporised coolant stream into a bottom region of said distillation column.

2. A method according to claim 1, wherein said nitrogen product is extracted as a gaseous nitrogen product stream.

3. A method according to claim 1 or claim 2, wherein said compressed and purified feed air is introduced into an intermediate location of said distillation column.

4. A method according to any one of the preceding claims, wherein said second vaporised coolant stream is compressed at essentially the temperature it passes out of heat exchange with the part of the nitrogen-rich stream being condensed.

5. A method according to claim 4, wherein said first and second coolant streams are subcooled (30) prior to their being expanded.

6. A method according to claim 5, wherein:
said nitrogen product is extracted as a gaseous nitrogen product stream; and
said gaseous nitrogen product stream, said refrigerant stream, and said first vaporised coolant stream indirectly exchange heat with said first and second coolant streams, thereby to subcool said first and second coolant streams.

7. An apparatus for producing nitrogen, said apparatus comprising:
a main heat exchanger (12) for cooling compressed, purified feed air to a temperature suitable for its rectification, for partially warming a first vaporised coolant stream, for fully cooling a second vaporised coolant stream to said temperature, and for indirectly transferring heat from said compressed, purified feed air to a refrigerant stream;
a distillation column (14) communicating with said main heat exchanger (12) to receive said compressed, purified feed air, thereby to produce a nitrogen rich column overhead and an oxygen-rich liquid as column bottoms;
a condenser (24) for condensing at least part of a nitrogen-rich stream composed of said nitrogen-rich column overhead, for introducing at least part of the resulting condensate into said distillation column (14) as reflux, and for vaporising first and second coolant streams, thereby to form said first and second vaporised coolant streams;
said condenser (24) communicating with said distillation column (14) so that said first coolant stream is composed of said oxygen-rich liquid and said second coolant stream is composed of a nitrogen containing liquid having a nitrogen concentration greater than that of said oxygen-rich liquid;
said condenser (24) also communicating with said main heat exchanger (12) so that said first vaporised coolant stream is partially warmed therewithin;
first and second expansion valves (32, 34) interposed between said condenser (12) and said distillation column (14) for expanding said first and second coolant streams, respectively;
means (36) for extracting a nitrogen product from another part of said nitrogen rich stream;
a turboexpander (42) communicating with said main heat exchanger (12) for expanding said first vaporised coolant stream with performance of work to form said refrigerant stream;
said main heat exchanger (12) communicating with the outlet of said turboexpander (42) so that said compressed and purified air indirectly exchanges heat with said refrigerant stream; and
a compressor (46) communicating with said condenser (12) for compressing said second vaporised coolant stream;
said compressor (46) also communicating with said main heat exchanger (12) so that said second vaporised coolant stream is coded therewithin; and
said distillation column (14) also communicating with said main heat exchanger (12) at said bottom region thereof for receiving said second vaporised coolant stream into said distillation column (14), after having been fully cooled to said temperature.

## Patentansprüche

1. Verfahren zum Erzeugen von Stickstoff wobei das Verfahren umfasst:
Abkühlen verdichteter gereinigter Speiseluft in einem Hauptwärmetauscher (12) auf eine für seine Rektifizierung geeignete Temperatur,
Einleiten der verdichteten gereinigten Speiseluft in eine Destillationssäule (14) zum Erzeugen eines stickstoffreichen Dampfs (20) im Säulenkopf und einer sauerstoffreichen Flüssigkeit (26) als Säulenbodenprodukt,
Abziehen von Stickstoff enthaltender Flüssigkeit aus der Destillationssäule, wobei die Stickstoff enthaltende Flüssigkeit eine Stickstoffkonzentration enthält, die größer als diejenige in der sauerstoffreichen Flüssigkeit ist,
Expandieren (34, 32) eines ersten und eines zweiten Kühlmittelstroms, der aus der sauerstoffreichen Flüssigkeit bzw. der Stickstoff enthaltenden Flüssigkeit besteht,
Kondensieren (24) mindestens eines Teils eines stickstoffreichen Stroms, der aus dem stickstoffreichen Säulenkopfdampf besteht, und Einleiten mindestens eines Teils des resultierenden Kondensats als Rückfluß in die Destillationssäule, wobei die Kondensation im Wärmeaustausch mit dem ersten und dem zweiten Kühlmittelstrom erfolgt, wodurch der erste und der zweite Kühlmittelstrom verdampft werden,
Abziehen eines Stickstoffprodukts (36) aus einem anderen Teil des stickstoffreichen Stroms,
Erwärmen des ersten verdampften Kühlmittelstroms im Hauptwärmetauscher (12) auf eine Temperatur, die niedriger als Umgebungstemperatur ist, und Expandieren (42) des erwärmten ersten verdampften Kühlmittelstroms unter Arbeitsleistung zur Bildung eines Kältemittelstroms,
indirekten Wärmeaustausch im Hauptwärmetauscher zwischen dem Kältemittelstrom (44) und der verdichteten und gereinigten Luft, und
Verdichten (46) des zweiten verdampften Kühlmittelstroms, Abkühlen des zweiten verdampften Kühlmittelstroms im Hauptwärmetauscher (12) auf eine für seine Rektifizierung geeignete Temperatur, und Einleiten des zweiten verdampften Kühlmittestroms in einen Bodenbereich der Destillationssäule.

2. Verfahren nach Anspruch 1, wobei das Stickstoffprodukt als gasförmiger Stickstoffproduktstrom abgezogen wird.

3. Verfahren nach Anspruch 1 oder 2, wobei die verdichtete und gereinigte Speiseluft an einer mittleren Stelle in die Destillationssäule eingeleitet wird.

4. Verfahren nach einem der vorhergehenden Ansprüche, wobei der zweite verdampfte Kühlmittelstrom bei im wesentlichen der Temperatur verdichtet wird, mit welcher er aus dem Wärmeaustausch mit dem Teil des kondensiert werdenden stickstoffreichen Stroms austritt.

5. Verfahren nach Anspruch 4, wobei der erste und der zweite Kühlmittelstrom vor dem Expandieren unterkühlt (30) wird.

6. Verfahren nach Anspruch 5, wobei das Stickstoffprodukt als gasförmiger Stickstoffproduktstrom abgezogen wird, und wobei der gasförmige Stickstoffproduktstrom, der genannte Kältemittelstrom, und der erste verdampfte Kühlmittelstrom in indirektem Wärmeaustausch mit dem ersten und dem zweiten Kühlmittelstrom stehen und dadurch den ersten und den zweiten Kühlmittelstrom unterkühlen.

7. Einrichtung zur Erzeugung von Stickstoff, wobei die Einrichtung aufweist:
einen Hauptwärmetauscher (12) zum Abkühlen verdichteter gereinigter Speiseluft auf eine für ihre Rektifizierung geeignete Temperatur, zum teilweisen Erwärmen eines ersten verdampften Kühlmittelstroms, zum vollständigen Abkühlen eines zweiten verdampften Kühlmittelstroms auf die genannte Temperatur, und zum indirekten Übertragen von Wärme von der verdichteten gereinigten Speiseluft auf einen Kältemittelstrom,
eine mit dem Hauptwärmetauscher (12) in Verbindung stehende Destillationssäule (14) zur Aufnahme der verdichteten gereinigten Speiseluft, um dadurch ein stickstoffreiches Säulenkopfprodukt und eine sauerstoffreiche Flüssigkeit als Säulenbodenprodukt zu erzeugen,
einen Kondensator (24) zum Kondensieren mindestens eines Teils eines stickstoffreichen Stroms, der aus dem stickstoffreichen Säulenkopfprodukt besteht, zum Einleiten mindestens eines Teils des resultierenden Kondensats in die Destillationssäule (14) als Rückfluß, und zum Verdampfen eines ersten und eines zweiten Kühlmittelstroms, um dadurch den ersten und zweiten verdampften Kühlmittelstrom zu bilden,
wobei der Kondensator (24) mit der Destillationssäule (14) in Verbindung steht, so dass der erste Kühlmittelstrom aus der genannten sauerstoffreichen Flüssigkeit besteht und der zweite Kühlmittelstrom aus einer Stickstoff enthaltenden Flüssigkeit besteht, die eine größere Stickstoffkonzentration als die sauerstoffreiche Flüssigkeit hat,
wobei der Kondensator (24) außerdem mit dem Hauptwärmetauscher (12) in Verbindung steht, so dass der erste verdampfte Kühlmittelstrom darin teilweise erwärmt wird,
ein erstes und ein zweites Expansionsventil (32, 34) das jeweils zwischen den Kondensator (12) und die Destillationssäule (14) geschaltet ist, um den ersten bzw. den zweiten Kühlmittelstrom zu expandieren,
Mittel (36) zum Abziehen eines Stickstoffprodukts aus einem anderen Teil des stickstoffreichen Stroms,
einem Turboexpander (42), der mit dem Hauptwärmetauscher (12) in Verbindung steht, um den ersten verdampften Kühlmittelstrom unter Arbeitsleistung zur Bildung des genannten Kältemittelstroms zu expandieren,
wobei der Hauptwärmetauscher (12) mit dem Auslaß des Turboexpanders (42) in Verbindung steht, so dass die verdichtete und gereinigte Luft in indirekten Wärmeaustausch mit dem Kältemittelstrom gebracht wird, und
einen Verdichter (46), der mit dem Kondensator (12) in Verbindung steht, um den zweiten verdampften Kühlmittelstrom zu verdichten,
wobei der Verdichter (46) außerdem mit dem Hauptwärmetauscher (12) in Verbindung steht, so dass der zweite verdampfte Kühlmittelstrom darin abgekühlt wird, und
wobei die Destillationssäule (14) außerdem mit dem Hauptwärmetauscher (12) an ihrem Bodenbereich in Verbindung steht, um den zweiten verdampften Kühlmittelstrom in die Destillationssäule (14) aufzunehmen, nachdem er vollständig auf die genannte Temperatur abgekühlt worden ist.

## Revendications

1. Procédé pour la production d'azote, ledit procédé comprenant les étapes consistant à :
refroidir dans un échangeur de chaleur principal (12) de l'air d'alimentation comprimé et épuré jusqu'à une température adaptée à sa rectification ;
introduire ledit air d'alimentation comprimé et épuré dans une colonne de distillation (14) pour produire une vapeur (20) riche en azote comme produit de tête de colonne et un liquide (26) riche en oxygène comme produit de pied de colonne ;
extraire le liquide contenant l'azote de ladite colonne de distillation, ledit liquide contenant l'azote ayant une concentration en azote supérieure à celle dudit liquide riche en oxygène ;
détendre (34, 32) un premier et un second flux réfrigérants composés respectivement dudit liquide riche en oxygène et dudit liquide contenant de l'azote ;
condenser (24) une fraction au moins d'un flux riche en azote composé dudit produit de tête de colonne fait de la vapeur riche en azote et introduire une fraction au moins du condensat résultant dans ladite colonne de distillation en guise de reflux, procédé dans lequel la condensation est réalisée en échange de chaleur avec lesdits premier et second flux réfrigérants, le premier et le second flux réfrigérants étant ainsi vaporisés ;
extraire un produit azote (36) d'une autre partie dudit flux riche en azote ;
réchauffer ledit premier flux réfrigérant vaporisé dans l'échangeur de chaleur principal (12) à une température inférieure à la température ambiante, et détendre (42) le premier flux réfrigérant vaporisé, réchauffé, avec réalisation d'un travail, pour former un flux réfrigérant ;
échanger indirectement de la chaleur dans l'échangeur de chaleur principal entre ledit flux réfrigérant (44) et ledit air comprimé et épuré ; et
comprimer (46) le second flux réfrigérant vaporisé, refroidir le second flux réfrigérant vaporisé dans l'échangeur de chaleur principal (12) à une température adaptée à sa rectification, et introduire ledit le second flux réfrigérant vaporisé dans une zone de pied de ladite colonne de distillation.

2. Procédé selon la Revendication 1, dans lequel ledit produit azote est extrait sous forme de flux de produit azote gazeux.

3. Procédé selon la Revendication 1 ou 2, dans lequel ledit air d'alimentation comprimé et épuré est introduit à un niveau intermédiaire de ladite colonne de distillation.

4. Procédé selon l'une quelconque des Revendications précédentes, dans lequel ledit second flux réfrigérant vaporisé est comprimé essentiellement à la température où il ressort de l'échange de chaleur avec la fraction du flux riche en azote en train d'être condensé.

5. Procédé selon la Revendication 4, dans lequel lesdits premier et second flux réfrigérants sont sous-refroidis (30) avant qu'ils ne soient détendus.

6. Procédé selon la Revendication 5, dans lequel ledit produit azote est extrait sous forme de flux de produit azote gazeux ; et ledit flux de produit azote gazeux, ledit flux réfrigérant, et ledit premier flux réfrigérant vaporisé échangent indirectement de la chaleur avec lesdits premier et second flux réfrigérants, ceci afin de sous-refroidir lesdits premier et second flux réfrigérants.

7. Dispositif pour la production d'azote, ledit dispositif comprenant :
un échangeur de chaleur principal (12) pour refroidir de l'air d'alimentation comprimé et épuré jusqu'à une température adaptée à sa rectification, pour réchauffer partiellement un premier flux réfrigérant vaporisé, pour refroidir complètement un second flux réfrigérant vaporisé à ladite température, et pour transférer indirectement de la chaleur dudit air d'alimentation comprimé et épuré à un flux réfrigérant ;
une colonne de distillation (14) communiquant avec ledit échangeur de chaleur principal (12) pour recevoir ledit air d'alimentation comprimé et épuré, afin de produire un produit de tête de colonne riche en azote et un produit de pied de colonne riche en oxygène ;
un condenseur (24) pour condenser une fraction au moins d'un flux riche en azote composé dudit produit de tête de colonne, pour introduire une fraction au moins du condensat résultant dans ladite colonne de distillation (14) en guise de reflux, et pour vaporiser le premier et le second flux réfrigérants afin de former lesdits premier et second flux réfrigérants vaporisés ;
ledit condenseur (24) communiquant avec ladite colonne de distillation (14) de telle façon que ledit premier flux réfrigérant soit composé dudit liquide riche en oxygène et que ledit second flux réfrigérant soit composé d'un liquide contenant de l'azote ayant une concentration en azote supérieure à celle dudit liquide riche en oxygène ;
ledit condenseur (24) communique aussi avec ledit échangeur de chaleur principal (12) de telle sorte que ledit premier flux réfrigérant y soit partiellement réchauffé ;
une première et une seconde vannes de détente (32, 34) interposées entre ledit condenseur (24) et ladite colonne de distillation (14) pour détendre respectivement lesdits premier et second flux réfrigérants ;
des moyens (36) pour extraire un produit azote d'une autre fraction dudit flux riche en azote ;
un turbodétendeur (42) communiquant avec ledit échangeur de chaleur principal (12) pour détendre ledit premier flux réfrigérant vaporisé avec réalisation d'un travail, pour former ledit flux réfrigérant ;
ledit échangeur de chaleur principal (12) communiquant avec la sortie dudit turbodétendeur (42) afin que ledit air comprimé et épuré échange indirectement de la chaleur avec ledit flux réfrigérant ; et
un compresseur (46) communiquant avec ledit condenseur (12) pour comprimer ledit second flux réfrigérant vaporisé ;
ledit compresseur (46) communiquant aussi avec ledit échangeur de chaleur principal (12) de telle façon que ledit second flux réfrigérant vaporisé y soit refroidit ; et
ladite colonne de distillation (14) communiquant aussi avec ledit échangeur de chaleur principal (12) au niveau de ladite zone de pied de celle-ci pour recevoir ledit second flux réfrigérant vaporisé dans ladite colonne de distillation (14) après qu'il ait été complètement refroidi à ladite température.
